(19) Europäisches Patentamt
European Patent Office
Office européen des brevets

(11) **EP 0 710 928 A2**

(12) **EUROPEAN PATENT APPLICATION**

(43) Date of publication:
**08.05.1996 Bulletin 1996/19**

(51) Int Cl.6: **G06T 9/00**

(21) Application number: **95420290.9**

(22) Date of filing: **23.10.1995**

(84) Designated Contracting States:
**DE FR GB**

(30) Priority: **03.11.1994 US 333664**

(71) Applicant: **EASTMAN KODAK COMPANY**
**Rochester, New York 14650-2201 (US)**

(72) Inventors:
• **Gandhi, Bhavan R., c/o Eastman Kodak Co.**
**Rochester, New York 14650-2201 (US)**

• **Smith, Craig Michael, c/o Eastman Kodak Co.**
**Rochester, New York 14650-2201 (US)**
• **Brower, Bernard Vincent,**
**c/o Eastman Kodak Co.**
**Rochester, New York 14650-2201 (US)**

(74) Representative: **Boulard, Denis**
**Kodak-Pathé**
**Département Brevets**
**CRT-Zone Industrielle**
**F-71102 Chalon-sur-Saône Cédex (FR)**

(54) **Digital image processor**

(57) An improved technique for encoding a digital image signal having pixels representing intensity, includes means for predicting a pixel value from a local multidimensional region of the digital image signal using a weighted value of local pixel values, the weighted value being a continuous quantity determined as a ratio of a function of local gradients; means for subtracting the predicted pixel value from an original pixel value to form a residual pixel value; means for encoding the residual pixel value.

FIG. 1

**Description**

This invention was made with Government support under contract number FA7056-92-C-0020 awarded by the Department of Defense. The Government has certain rights in this invention.

## FIELD OF THE INVENTION

The invention relates generally to the field of digital image processing, and more specifically to the area of prediction-based image data compression.

## BACKGROUND OF THE INVENTION

Digital image compression can be viewed as a sequence of processing steps comprising data transformation, quantization of the transformed data, followed by encoding of the quantized data. The data transformation maps the image data into a more statistically stable representation thus, allowing the design of more efficient quantizers and encoders. Prediction-based compression schemes transform the image data into a residual space. This residual is the mathematical difference between the original pixel value and it's predicted value. Transforming the image to residual space reduces the spatial correlation of the image pixels thus allowing for more efficient compression. The image residual is then compressed through appropriate quantizing and encoding. Since the quantizer invokes numerical loss, the quantization step may be bypassed for numerically lossless data compression.

A specific method of transforming the image to a residual space employs the concept of predicting a specific pixel value based on the values of neighboring pixels and subtracting the predicted value from the actual value to produce a residual value. The residual values represent the transformed image. The original pixel values are recovered from the residual values by forming predicted values and adding the residual values to the predicted values. An image pixel is generally predicted using a linear combination of its neighboring pixels. The weightings of these neighboring pixels, or the prediction coefficients, are optimally determined by the correlation statistics of the image. More specifically, the correlation between the current pixels and the neighboring pixels is determined. Prediction coefficients for the in line pixels are higher if there is greater image correlation within an image line. Similarly, pixels in an image column are weighted more heavily if the correlation within a column is higher. The only requirement on the prediction coefficients is that the sum of the weights add to unity for preserving image power.

Fixed prediction schemes typically predict a pixel as a linear combination of previously (causally) occurring pixels. The corresponding coefficients, or prediction weights, for the causal pixels used in the linear prediction are fixed. The non-adaptive nature of the prediction coefficients typifies the class of globally fixed prediction schemes. An example of a fixed prediction scheme is where an image pixel is predicted by simply averaging the side adjacent pixel and the top adjacent pixel, i.e. the prediction coefficients are 0.5 and 0.5. In this specific example, there is no adaptation to the local image information or the image type. Different globally fixed prediction schemes may be utilized based on image type as is done in the Joint Photographic Experts Group (JPEG) lossless compression algorithm. The JPEG lossless compression algorithm has a bank of fixed predictors from which the user can choose for a specific application or image type.

Adaptive predictors are realized by either changing the relative causal pixels used for prediction, or by changing the prediction coefficients based on local image information. One such adaptive predictor is Graham's predictor (see U.S. Patent No. 2,905,756, issued September 22, 1959 to R.E. Graham). In Graham's predictor the value of the current pixel is predicted by the value of the side adjacent pixel or the top adjacent pixel. The decision of which pixel value to use in the prediction is determined by measuring the local horizontal and vertical gradients using the side adjacent pixel, the top adjacent pixel, and the diagonal adjacent pixel. The local horizontal gradient is computed as the difference between the top adjacent pixel and the diagonal adjacent pixel. Similarly the local vertical gradient is computed as the difference between the side adjacent pixel and the diagonal adjacent pixel. The top adjacent pixel is used as the prediction value if the magnitude of the vertical gradient is smaller than the magnitude of the horizontal gradient; conversely, the side adjacent pixel is used if the magnitude of the horizontal gradient is smaller. This method essentially employs a binary weighting of the local pixel values based on the local gradients. One problem with Graham's predictor is that in a noisy image region where the edges are not clearly vertical or horizontal the prediction fails causing the residual to become very large and thereby decreasing the compressibility of the image or increasing the noise in the reconstructed image. It is therefore the object of the present invention to provide an improved encoding method and apparatus that decreases the severity of the problems noted above.

## SUMMARY OF THE INVENTION

The present invention is directed to overcoming one or more of the problems set forth above by providing an improved scheme for encoding a digital image signal having pixels representing intensity, of the type disclosed by Graham, wherein the weighting of the neighborhood pixels is a continuous quantity computed from a ratio of local gradients.

This scheme is advantageous when compared to the prior art adaptive predictive techniques in that it predicts more accurately over edge information in real-time with no prior training on the image type. The increased prediction accuracy results in a more stable, lower variance residual statistics, which translates into increased quantizer and encoder efficiency resulting in greater data compression for both lossy and lossless schemes.

These and other aspects, objects, features, and advantages of the present invention will be more clearly understood and appreciated from a review of the following detailed description of the preferred embodiments and appended claims, and the reference to the accompanying drawings.

## BRIEF DESCRIPTION OF THE DRAWINGS

Fig. 1 is a block diagram of a DPCM image compression system according to the present invention.

Fig. 2 is a block diagram of an alternate compression system according to the present invention.

Fig. 3 is a block diagram of a further alternate DPCM image compression system according to the present invention.

Fig. 4 is a block diagram of a DPCM image decompression system according to the present invention.

Fig. 5 is a pictorial depicting the pixel that is to be predicted along with the neighborhood of quantized pixels used for the prediction.

Fig. 6 is a flow chart of the prediction scheme according to the present invention.

Fig. 7 is a block diagram depicting a hardware implementation of the prediction scheme shown in Fig. 6.

Fig. 8 is a pictorial depicting the pixel that is to be predicted along with an expanded surrounding neighborhood of reconstructed pixel values.

Fig. 9 is a pictorial depicting the pixel that is to be predicted along with a neighborhood of reconstructed pixel values expanded into related images used for alternate prediction schemes according to the present invention.

Fig. 10 is a flow chart of the prediction scheme according to the present invention applied to a plurality of related images such as the color components of a color image or a sequence of motion picture images.

## DETAILED DESCRIPTION OF THE INVENTION

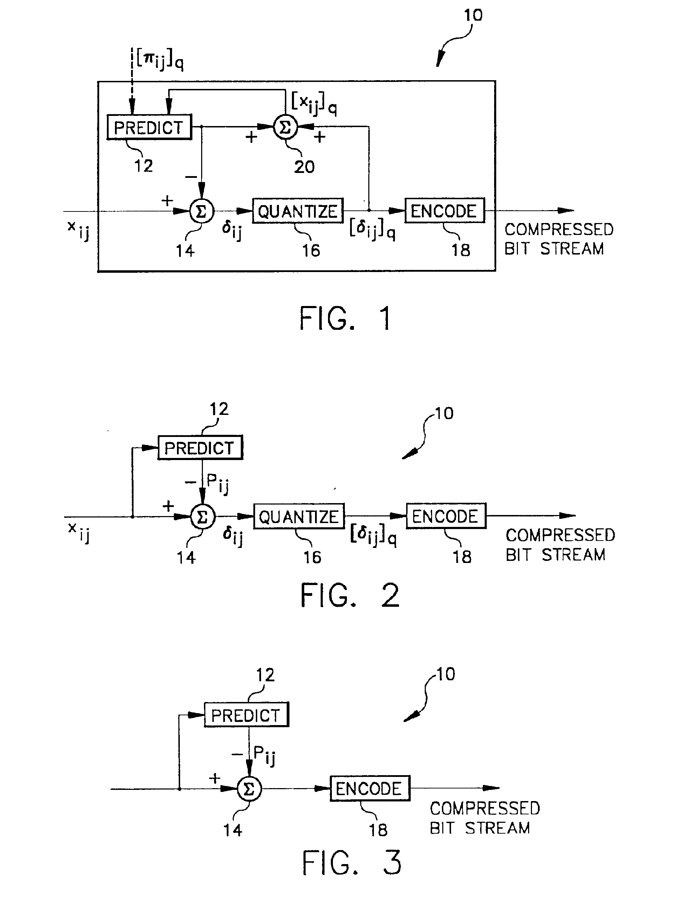

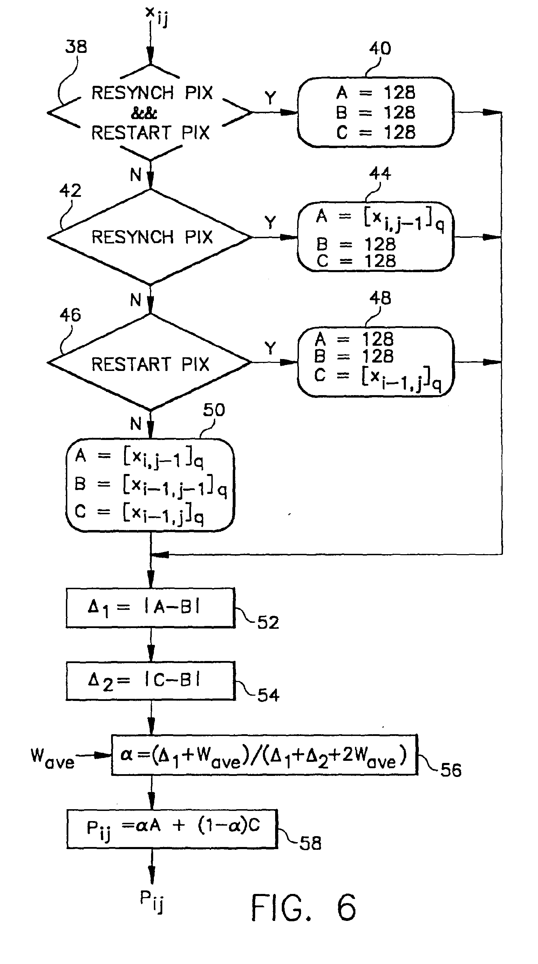

In a differential pulse code modulation (DPCM) system, image data is transformed into a residual space by predicting an image pixel value and forming the difference between the original pixel value and the corresponding predicted pixel value. A block diagram of a DPCM image compression system generally designated 10 is shown in Figure 1. An original pixel value $x_{ij}$, is supplied to the system 10. A predicted pixel value $P_{ij}$, provided according to the present invention by a predictor 12 is subtracted from the original pixel value in subtractor 14 to provide a pixel difference value $\delta_{ij}$. Predictor 12 is described in further detail below with reference to Fig. 6. The difference pixel value $\delta_{ij}$ is quantized in a quantizer 16 to produce a quantized difference pixel value $[b_{ij}]_q$. The quantized difference pixel value is encoded by an encoder 18 to produce a compressed bit stream for transmission or storage. The encoder may perform a further compression using a lossless code such as a Huffman or arithmetic code. The predicted pixel value $P_{ij}$ is formed in predictor 12 by employing reconstructed pixel values $[x_{ij}]_q$. The reconstructed pixel values $[x_{ij}]_q$ are formed by adding the predicted pixel value to the quantized difference pixel value $[\delta_{ij}]_q$ in adder 20.

Alternate implementations of a DPCM compression system utilizing the prediction scheme according to the present invention are depicted in Figures (2) and (3), wherein elements similar to those in Fig 1 are similarly numbered. Figure (2) shows a compression system where the original pixels $x_{ij}$ are used by predictor 12 to predict subsequent pixel values. Although this version utilizes the prediction scheme according to the present invention, it does not localize the quantization errors. The implementation in Figure (1) localizes the quantization errors by utilizing the reconstructed pixels to form future predictions. Figure (3) shows a further alternate compression scheme without a quantizer to provide a numerically lossless compression system 10.

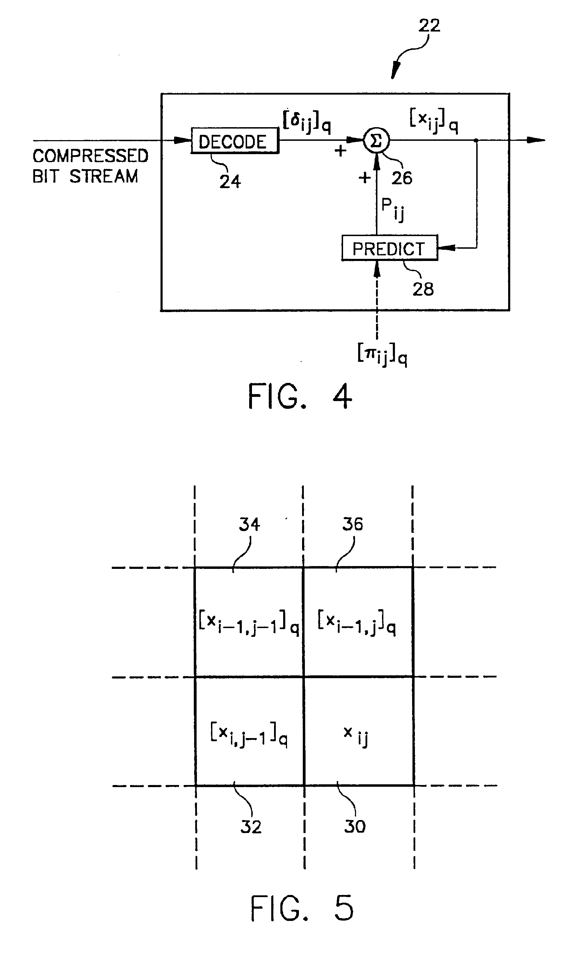

A block diagram of a DPCM image decompression system 22 corresponding to the above described DPCM image compression systems 10 is depicted in Figure 4. The compressed bit-stream supplied to the decompression system 22 is decoded by a decoder 24 into a quantized difference pixel value, $[\delta_{ij}]_q$. Note that for the lossless compression system shown in Fig. 3, the quantized difference pixel value $[\delta_{ij}]_q$ is identical to the difference pixel value $\delta_{ij}$. The quantized difference pixel value is added in adder 26 to a predicted pixel value $P_{ij}$ provided by predictor 28. Predictor 28 is identical to predictor 12 in the compression systems shown in Figs. 1-3 to provide a reconstructed pixel value $[x_{ij}]_q$. Predictor 28 uses reconstructed pixel values $[x_{ij}]_q$ to form the predicted pixel value $P_{ij}$.

Referring to Fig. 5, the neighborhood of pixels employed by the adaptive predictor according to the present invention will be described. The adaptive predictor predicts an original image pixel, $x_{ij}$ (30), using a neighborhood of reconstructed pixel values including a side adjacent pixel, $[x_{i,j-1}]_q$ (32), a diagonal adjacent pixel, $[x_{i-1,j-1}]_q$ (34), and a top adjacent pixel, $[x_{i-1,j}]_q$ (36). The predicted value of $x_{ij}$, denoted by $p_{ij}$, is obtained according to the present invention by forming a linear combination of the reconstructed side adjacent and top adjacent pixels, as shown in Equation (1).

$$p_{ij} = \alpha \left[ x_{i,j-1} \right]_q + (1-\alpha) \left[ x_{i-1,j} \right]_q \qquad (1)$$

The predictor coefficient, $\alpha$, is a function of the local gradients $\Delta_1$ and $\Delta_2$ biased by a constant term, $W_{ave}$. The functional form of $\alpha$ is shown by Equation (2).

$$\alpha = \frac{\Delta_1 + W_{ave}}{\Delta_1 + \Delta_2 + 2W_{ave}} \qquad (2)$$

Where the local gradients $\Delta_1$ and $\Delta_2$ are defined as follows:

$$\Delta_1 = \left| \left[ x_{i,j-1} \right]_q - \left[ x_{i-1,j-1} \right]_q \right| , \text{ and} \qquad (3)$$

$$\Delta_2 = \left| \left[ x_{i-1,j} \right]_q - \left[ x_{i-1,j-1} \right]_q \right| ,$$

and where $W_{ave}$ is a small constant term greater than or equal to 1 (preferably 2) employed to suppress adaptation to noisy regions in the image. The larger $W_{ave}$ becomes, the closer the predictor becomes to a fixed predictor with coefficients of 0.5.

Figure 6 is the flow chart of a prediction scheme according to the present invention. It shows the steps for computing the predicted value, $p_{ij}$, for an input pixel value, $x_{ij}$. A check (38) is first performed to determine if $x_{ij}$ is a resync and a restart pixel. A resync pixel is defined as a pixel lying in the first independent compression line of the image. A restart pixel is defined as a pixel lying in the first independent compression column of the image. If the input pixel is classified as both a resync and a restart pixel (38) then, three storage registers A,B, and C are loaded with a preselected value (40). The preselected value is preferably near the middle of the possible pixel values (e.g. 128 for an 8-bit pixel). If the input pixel is classified as a resync only pixel (42), the storage register A is loaded with the reconstructed value of the side adjacent pixel, and registers B and C are loaded with the preselected value (44). If the input pixel is classified as a restart only pixel (46), the storage registers A and B are loaded with the preselected value and storage register C is loaded with the reconstructed top adjacent pixel value (48). If the input pixel is neither a resync nor a restart pixel, the registers A, B, and C are loaded with the reconstructed side, diagonal and top adjacent pixel values respectively (50).

$\Delta_1$ and $\Delta_2$ are determined using the contents of registers A,B and C (52,54), and $\alpha$ is determined from the values $\Delta_1$, $\Delta_2$ and $W_{ave}$ (56). Finally the predicted pixel value is determined (58).

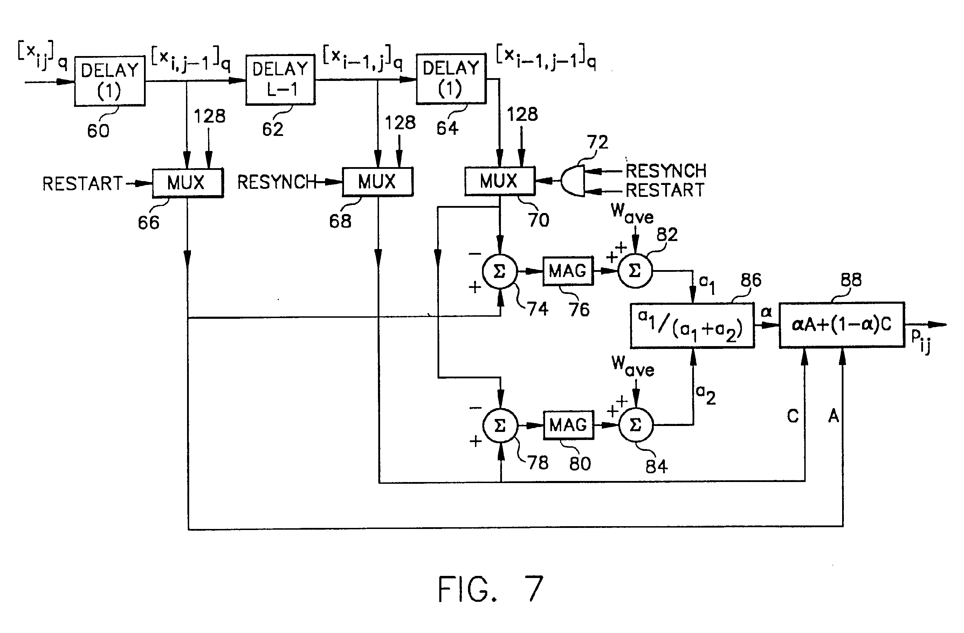

The predictor 12 can be implemented in a general purpose computer according to the flow chart of Fig. 6, alternatively, it may be embodied in digital processing hardware as shown in Fig. 7. As shown in Figure 7, the reconstructed pixel values $[x_{ij}]_q$ (e.g. from the adder 20 in Fig. 1) forming the neighborhood of the input pixel $x_{ij}$, are used to form the predicted value, $p_{ij}$. The reconstructed pixel values are buffered and delayed by digital delays 60, 62 and 64 to simultaneously provide the reconstructed side, diagonal and top adjacent pixel values. Each of the reconstructed pixel values are multiplexed with a preselected value (e.g. 128) in multiplexers 66, 68 and 70 depending on the value of restart and resync flags. The preselected value is chosen if the multiplexer selection signal is high; i.e. the restart, resync, or both flags are high. Restart and resync flags are ANDED in an AND gate 72 and supplied to multiplexer 70.

The value provided by multiplexer 66 is subtracted from the value provided by multiplexer 70 in subtractor 74. The magnitude of the difference value provided by subtractor 74 is computed by magnitude calculator 76 to form a first local gradient signal $\Delta_1$. Similarly, the value provided by multiplexer 68 is subtracted from the value provided by multiplexer 70 in subtractor 78. The magnitude of the difference is computed using magnitude calculator 80 to form a second local gradient signal $\Delta_2$. The magnitude of the difference value provided by subtractor 78 is computed by magnitude calculator 80 to form $\Delta_2$. A predetermined constant Wave is added to the first local gradient signal $\Delta_1$ provided by magnitude calculator 76 in adder 82. Likewise, the predetermined constant $W_{ave}$ is added to the second local gradient signal $\Delta_2$ provided by magnitude calculator 80 in adder 84. values provided by adders 82 ($a_1$) and 84 ($a_2$) are inputs to an alpha calculator 86 which computes the prediction weight, $\alpha$. Finally, the predicted pixel value, $P_{ij}$, is computed in the prediction calculator 88 using the signals provided by alpha calculator 86 ($\alpha$) and multiplexers 66 (A) and 68 (C). The alpha calculator 86 may be alternatively implemented as a look up table (LUT).

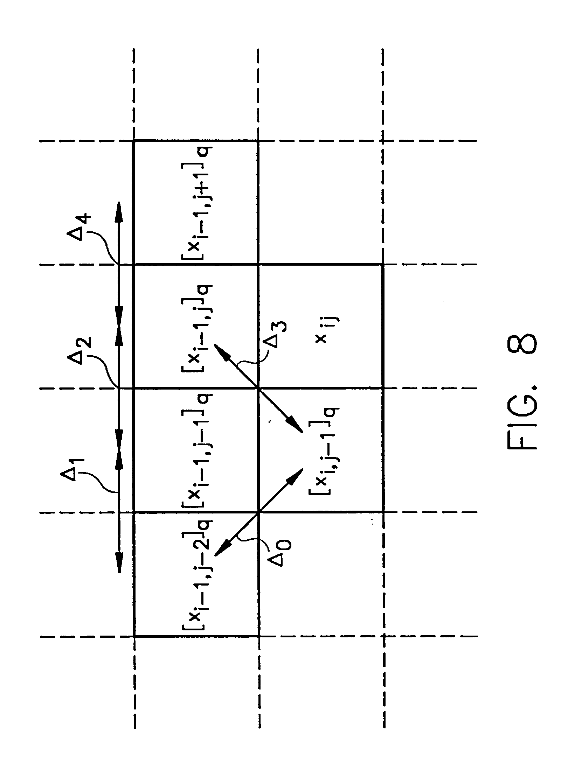

The implementation of the adaptive predictor described above employs a weighting that is a continuous quantity computed from a ratio of specific local gradients. Variations of the predictor employing a weighting that is a continuous quantity of ratios of different local gradients may be devised according to the present invention. For example, the following description gives two alternate schemes for generating the prediction according to the present invention. Figure 8 is a pictorial depicting a pixel to be predicted and an expanded surrounding neighborhood of reconstructed pixel values including a preceding diagonal adjacent pixel $[x_{i-1,j-2}]_q$, and a following diagonal adjacent pixel $[x_{i-1,j+1}]q$. One alternative approach for predicting a pixel value from this expanded surrounding neighborhood is given by equation (4).

$$p_{ij} = \alpha_0 \left[ x_{i,j-1} \right]_q + \alpha_1 \left[ x_{i-1,j-1} \right]_q + \alpha_2 \left[ x_{i-1,j} \right]_q \tag{4}$$

The predictor coefficient $\alpha_i$ is a function of the local gradients $\Delta_0$, $\Delta_1$, and $\Delta_2$, and $W_{ave}$.

$$\alpha_i = (\Delta_i + W_{ave})/(\Delta_0 + \Delta_1 + \Delta_2 + 3W_{ave})$$

where i=0, 1, and 2. (5)

The local gradients are defined as

$$\Delta_0 = \left| \left[ x_{i,j-1} \right]_q - \left[ x_{i-1,j-2} \right]_q \right| , \tag{6}$$

$$\Delta_1 = \left| \left[ x_{i-1,j-1} \right]_q - \left[ x_{i-1,j-2} \right]_q \right| , \text{ and} $$

$$\Delta_2 = \left| \left[ x_{i-1,j} \right]_q - \left[ x_{i-1,j-1} \right]_q \right| .$$

The local gradients are indicated in Fig. 8 by arrows labeled $\Delta_0$- $\Delta_4$. Wave is a small constant term greater than or equal to 1 (preferably 2).

Another related approach for predicting a current pixel value is illustrated by equation (7).

$$p_{i,j} = \alpha_3 \left[ x_{i,j-1} \right]_q + \alpha_4 \left[ x_{i-1,j+1} \right]_q \tag{7}$$

The predictor coefficient $\alpha_i$ is a function of the local gradients $\Delta_3$, $\Delta_4$, and $W_{ave}$.

$$\alpha_i = (\Delta_i + W_{ave})/(\Delta_3 + \Delta_4 + 2W_{ave}) \text{ for i=3, and 4.} \tag{8}$$

The local gradients are defined as

$$\Delta_3 = \left| \left[ x_{i-1,j} \right]_q - \left[ x_{i,j-1} \right]_q \right| , \text{ and} \tag{9}$$

$$\Delta_4 = \left| \left[ x_{i-1,j+1} \right]_q - \left[ x_{i-1,j} \right]_q \right| ,$$

and where Wave is a small constant term greater than or equal to 1 (preferably 2).

These predictors are implemented in the apparatus shown in Figs. 1-4. The common feature is that the prediction weight is a continuous quantity computed from a ratio of local gradients.

The above embodiments of the present invention have focused on adaptive prediction using a neighborhood of pixels and local gradients within a single image. The adaptive gradient-based prediction according to the present invention may be extended to multiple related images by using a neighborhood of pixels and local gradients spanning these multiple related images. One example of multiple related images are the color components of a color image (e. g. red, green, and blue). The color image may have more than three color components depending on the nature of the image. Another example of multiple related images are successive image frames in a motion picture.

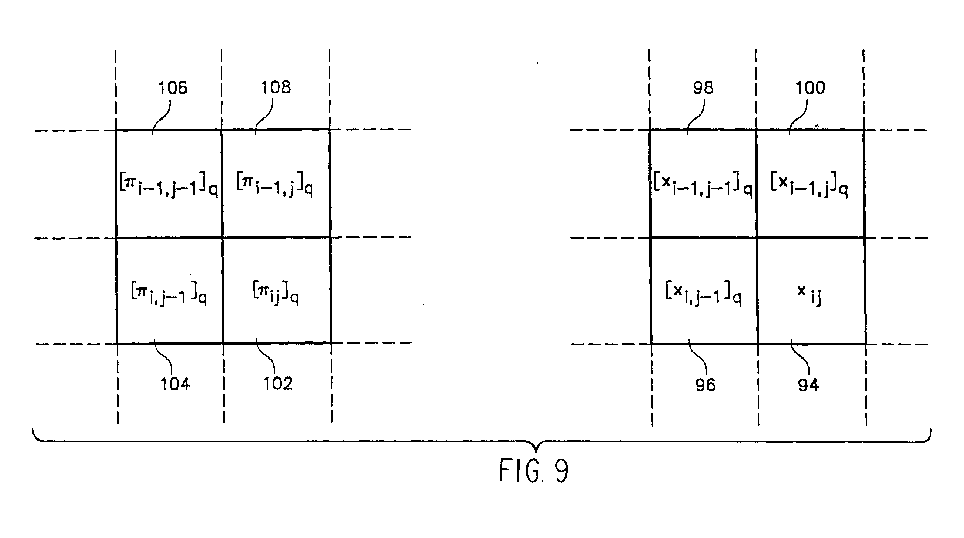

Referring back to Fig. 1, an implementation of a DPCM image compression system employing multiple related images will be described. As shown by the dotted line into predictor 12, reconstructed image pixels $[\pi_{ij}]_q$ from a related image are used to predict subsequent pixel values as described below. Referring to Fig. 9, the extension of the predictor to multiple related images predicts an original image pixel in the current image, $x_{ij}$(94), using a neighborhood of reconstructed pixel values from the current image including a side adjacent pixel, $[x_{i,j-1}]_q$ (96), and diagonal adjacent pixel, $[x_{i-1,j-1}]_q$ (98), and a top adjacent pixel, $[x_{i-1,j}]_q$ (100), and also using a neighborhood of reconstructed pixel values from a related image including a previous adjacent pixel $[\pi_{ij}]_q$ (102), a previous side adjacent pixel $[\pi_{i,j-1}]_q$ (104), a previous diagonal pixel $[\pi_{i-1,j-1}]_q$ (106), and previous top adjacent pixel $[\pi_{i-1,j}]_q$ (108). The predicted value of $x_{ij}$, denoted by $p_{ij}$, is obtained according to the present invention by forming a linear combination of reconstructed side adjacent, top adjacent, previous side adjacent, and previous top adjacent pixel values, as shown in Equation (10).

$$P_{ij}=\left[\pi_{ij}\right]_q + \alpha\left(\left[x_{i,j-1}\right]_q - \left[\pi_{i,j-1}\right]_q\right) + (1-\alpha)\left(\left[x_{i-1,j}\right]_q - \left[\pi_{i-1,j}\right]_q\right) \qquad (10)$$

The predictor coefficient $\alpha$ is a function of the local gradients $\Delta_1$ and $\Delta_2$ biased by a constant term, $W_{ave}$. The functional form of $\alpha$ is shown by equation (11).

$$\alpha = \frac{\Delta_1 + W_{ave}}{\Delta_1 + \Delta_2 + 2W_{ave}} \qquad (11)$$

where the local gradients are defined as follows:

$$\Delta_1 = \left|\left[\pi_{i-1,j}\right]_q - \left[\pi_{i,j}\right]_q\right| \ , \ \text{and} \qquad (12)$$

$$\Delta_2 = \left|\left[\pi_{i-1,j}\right]_q - \left[\pi_{i,j}\right]_q\right| \ ,$$

and where $W_{ave}$ is a small constant term grater than or equal to 1 (preferably 2) employed to suppress adaptation to noisy regions in the image bands.

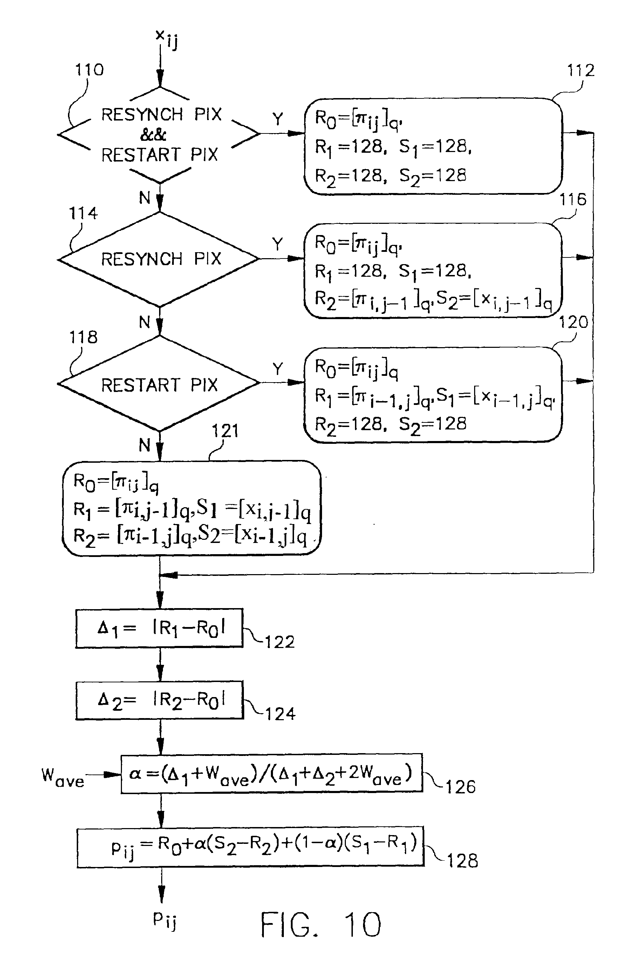

Fig. 10 is the flow chart of the prediction scheme extended for predicted across multiple related images according to the present invention. It shows the steps for computing the predicted value, $P_{ij}$, for an input pixel value, $x_{ij}$. A check (110) is first performed to determine if $x_{ij}$ is a resync and a restart pixel. If the input pixel is classified as both a resync and a restart pixel then, a first storage register, $R_0$, is loaded with the reconstructed previous adjacent pixel $[\pi_{ij}]_q$, and the remaining four storage registers ($R_1$, $R_2$, $S_1$, and $S_2$) are loaded with a preselected value (112). The preselected value is preferably 128 for an 8-bit pixel. If the input pixel is classified as a resync only pixel (114), storage registers $R_0$ and $R_2$ are loaded with the reconstructed previous adjacent $[\pi_{ij}]_q$ and previous side adjacent $[\pi_{i,j-1}]_q$ pixels respectively, storage register $S_2$ is loaded with the reconstructed side adjacent pixel $[x_{i,j-1}]_q$, and the remaining storage registers ($R_1$ and $S_1$) are loaded with the preselected value of 128 (116). If the input pixel is classified as a restart only pixel (118), storage registers $R_0$, $R_1$, and $S_1$ are loaded with the reconstructed previous adjacent, previous top adjacent, and top adjacent pixel values respectively, and registers $R_2$ and $S_2$ are loaded with the preselected value (120). If the input pixel is neither a resync nor a restart pixel, registers $R_0$, $R_1$, and $R_2$ are loaded with reconstructed previous adjacent, previous side adjacent, and previous top adjacent pixel values respectively, and registers $S_1$ and $S_2$ are loaded with reconstructed side adjacent and top adjacent pixel values respectively (121).

$\Delta_1$ and $\Delta_2$ are determined using the contents of registers $R_0$, $R_1$, and $R_2$ (122, 124), and $\alpha$ is determined from the values $\Delta_1$, $\Delta_2$, and $W_{ave}$ (126). Finally the predicted pixel value is determined (128).

The predictor according to the present invention applied extended to multiple related images offers the added advantage of using redundancies in the related images to form a more accurate predictor than available in the current image. The prediction based on a single image is useful for cases where there is little or no redundant information between multiple related images.

Referring to Fig. 4, an implementation of a DPCM image decompression system employing multiple related images is readily produced by basing the prediction on reconstructed pixel values from related images $[\pi_{ij}]_q$ as shown by the dotted line into predictor 28. Predictor 28 is identical to the predictor 12 described above with reference to Fig. 10.

## Industrial Applicability and Advantages

The image encoding and decoding technique according to the present invention is useful in digital image signal processing. The technique may be employed for example in an image telecommunication system, or an image storage system. The improved prediction scheme is highly adaptive over edge information without compromising the prediction of information that is not inherently edge like. The sensitivity to edge information is directly controllable through the choice of $W_{ave}$. The smaller the value of Wave, the greater the sensitivity to edges, and vice-versa. This adaptivity of the predictor over edge information makes the encoder insensitive to fixed pattern noise and horizontal and vertical failures common to CCD image sensors. An example of such a failure is one where an image sensing pixel in a CCD image sensing array fails and clamps the output value high. This results in a streak in the vertical direction of the image. The improved predictor employed in the present invention will predict across this artifact by defaulting to a one-dimensional prediction, thereby allowing greater compressibility across the artifact.

The improved predictor is image independent and does not require training. Additionally, the simplicity of the improved predictor makes it easier to implement in a real-time process.

The invention has been described with reference to a preferred embodiment. However, it will be appreciated that variations and modifications can be effected by a person of ordinary skill in the art without departing from the scope of the invention.

PARTS LIST

10   DPCM image compression system
12   predictor
14   subtractor
16   quantizer
18   encoder
20   adder
22   DPCM image decompression system
24   decoder
26   adder
28   predictor
30   original image pixel
32   side adjacent pixel
34   diagonal adjacent pixel
36   top adjacent pixel
38   resync and restart pixel check step
40   loading storage register step
42   resync pixel check step
44   loading storage register step
46   restart pixel check step
48   loading storage register step
50   loading storage register step
52   compute $\Delta_1$ step
54   compute $\Delta_2$ step
56   compute $\alpha$ step
58   compute predicted pixel value step
60   one pixel delay
62   one line minus one pixel delay
64   one pixel delay
66   multiplexer
68   multiplexer
70   multiplexer
72   AND gate
74   subtractor
76   magnitude calculator
78   subtractor
80   magnitude calculator
82   adder
84   adder
86   $\alpha$ calculator
88   predicted value calculator
94   original image pixel value
96   reconstructed side adjacent pixel value
98   reconstructed diagonal adjacent pixel value
100  reconstructed top adjacent pixel value
102  reconstructed previous adjacent pixel value
104  reconstructed previous side adjacent pixel value
106  reconstructed previous diagonal pixel value
108  reconstructed previous top adjacent pixel value
110  resync and restart pixel check step
112  loading storage register step
114  resync pixel check step
116  loading storage register step
118  restart pixel check step

120  loading storage register step
121  loading storage register step
122  compute $\Delta_1$ step
124  compute $\Delta_2$ step
126  compute $\alpha$ step
128  compute predicted value step

**Claims**

1. Apparatus for encoding a digital image signal having pixels representing intensity, comprising: a) means for predicting a pixel value from a local multidimensional region of the digital image signal using a weighted value of local pixel values, said weighted value being a continuous quantity determined as a ratio of a function of local gradients; b) means for subtracting the predicted pixel value from an original pixel value to form a residual pixel value; and c) means for encoding the residual pixel value.

2. The apparatus claimed in claim 1, wherein said predicting means predicts the value of a pixel $p_{ij}$ by forming a linear combination of a reconstructed side adjacent pixel $[x_{i,j-1}]_q$, and a reconstructed top adjacent pixel $[x_{i-1,j}]_q$, as follows,

$$p_{ij} = \alpha\left[x_{i,j-1}\right]_q + (1-\alpha)\left[x_{i-1,j}\right]_q,$$

where a weighting coefficient $\alpha$ is determined as follows:

$$\alpha = \frac{\Delta_1 + W_{ave}}{\Delta_1 + \Delta_2 + 2W_{ave}},$$

where $\Delta_1$ is a local gradient determined by the value of the difference between a reconstructed side adjacent pixel and a reconstructed diagonal adjacent pixel, $\Delta_2$ is a local gradient determined by the value of the difference between a reconstructed top adjacent pixel and a reconstructed diagonal adjacent pixel, and $W_{ave}$ is a small constant term greater than or equal to 1.

3. The apparatus claimed in claim 1, wherein said predicting means predicts the value of a pixel $p_{ij}$ by forming a linear combination of a reconstructed side adjacent pixel $[x_{i,j-1}]_q$, a reconstructed diagonal adjacent pixel $[x_{i-1,j-1}]_q$, and a reconstructed top adjacent pixel $[x_{i-1,j}]_q$ as follows,

$$p_{ij} = \alpha_0\left[x_{i,j-1}\right]_q + \alpha_1\left[x_{i-1,j-1}\right]_q + \alpha_2\left[x_{i-1,j}\right]_q,$$

where weighting coefficients $\alpha_i$ are determined as follows:

$$\alpha_i = \frac{(\Delta_i + W_{ave})}{(\Delta_0 + \Delta_1 + \Delta_2 + 3W_{ave})},$$

where i=0, 1, and 2, and
where $\Delta_0$ is a local gradient determined by the value of the difference between a reconstructed side adjacent pixel and reconstructed preceding diagonal adjacent pixel, $\Delta_1$ is a local gradient determined by the value of the difference between a reconstructed diagonal adjacent pixel and a reconstructed preceding diagonal adjacent pixel, $\Delta_2$ is a local gradient determined by the value of the difference between a reconstructed top adjacent pixel and a reconstructed diagonal adjacent pixel, and $W_{ave}$ is a small constant term greater than or equal to 1.

4. The apparatus claimed in claim 1, wherein said predicting means predicts the value of a pixel $p_{ij}$ by forming a linear combination of a reconstructed side adjacent pixel $[x_{i,j-1}]_q$, and a reconstructed following diagonal adjacent pixel $[x_{i-1,j+1}]_q$

$$p_{i,j} = \alpha_3\left[x_{i,j-1}\right]_q + \alpha_4\left[x_{i-1,j+1}\right]_q,$$

where weighting coefficients $\alpha_i$ are determined as follows

$$\alpha_i = \frac{\Delta_i + W_{ave}}{(\Delta_3 + \Delta_4 + 2W_{ave})}$$

for i=3, and 4, and
where $\Delta_3$ is a local gradient determined by the value of the difference between a reconstructed top adjacent pixel and reconstructed side adjacent pixel, and $\Delta_4$ is a local gradient determined by the value of the difference between a reconstructed following diagonal adjacent pixel and a reconstructed top adjacent pixel, and $W_{ave}$ is a small constant term greater than or equal to 1.

5.  The apparatus claimed in claim 1, wherein said digital image signal represents multiple related images, and wherein said predicting means predicts the value of a pixel $p_{ij}$ by forming a linear combination of a reconstructed side adjacent $[x_{i,j-1}]_q$, top adjacent $[x_{i-1,j}]_q$, previous side adjacent $[\pi_{i,j-1}]_q$, and previous top adjacent pixel $[\pi_{i-1,j}]_q$ values, as follows

$$P_{ij} = \left[\pi_{ij}\right]_q + \alpha\left(\left[x_{i,j-1}\right]_q - \left[\pi_{i,j-1}\right]_q\right) + (1-\alpha)\left(\left[x_{i-1,j}\right]_q - \left[\pi_{i-1,j}\right]_q\right),$$

where a weighting coefficient $\alpha$ is determined as follows:

$$\alpha = \frac{\Delta_1 + W_{ave}}{\Delta_1 + \Delta_2 + 2W_{ave}},$$

where $\Delta_1$ is a local gradient determined by the value of the difference between a reconstructed previous top adjacent pixel and a reconstructed previous adjacent pixel, and $\Delta_2$ is a local gradient determined by the value of the difference between a reconstructed previous side adjacent pixel and a reconstructed previous adjacent pixel, and $W_{ave}$ is a small constant term greater than or equal to 1.

6.  A method for encoding a digital image signal having pixels representing intensity, comprising the steps of:

a) predicting a pixel value from a local multidimensional region of the digital image signal using a weighted value of local pixels, said weighting being a continuous quantity determined as a ratio of a function of local gradients;
b) subtracting the predicted pixel value from an original pixel value to form a residual pixel value; and
c) encoding the residual pixel value.

7.  The method claimed in claim 6, wherein said predicting step includes predicting the value of a pixel $p_{ij}$ by forming a linear combination of a reconstructed side adjacent pixel $[x_{i,j-1}]_q$, and a reconstructed top adjacent pixel $[x_{i-1,j}]_q$, as follows,

$$p_{ij} = \alpha\left[x_{i,j-1}\right]_q + (1-\alpha)\left[x_{i-1,j}\right]_q,$$

where a weighting coefficient $\alpha$ is determined as follows:

$$\alpha = \frac{\Delta_1 + W_{ave}}{\Delta_1 + \Delta_2 + 2W_{ave}},$$

where $\Delta_1$ is a local gradient determined by the value of the difference between a reconstructed side adjacent pixel and a reconstructed diagonal adjacent pixel, $\Delta_2$ is a local gradient determined by the value of the difference between a reconstructed top adjacent pixel and a reconstructed diagonal adjacent pixel, and $W_{ave}$ is a small constant term greater than or equal to 1.

8.  The method claimed in claim 6, wherein said predicting step includes predicting the value of a pixel $p_{ij}$ by forming a linear combination of a reconstructed side adjacent pixel $[x_{i,j-1}]q$, a reconstructed diagonal adjacent pixel $[x_{i-1,j-1}]q$, and a reconstructed top adjacent pixel $[x_{i-1,j}]_q$ as follows,

$$p_{ij} = \alpha_0\left[x_{i,j-1}\right]_q + \alpha_1\left[x_{i-1,j-1}\right]_q + \alpha_2\left[x_{i-1,j}\right]_q,$$

where weighting coefficients $\alpha_i$ are determined as follows:

$$\alpha_i = \frac{(\Delta_i + W_{ave})}{(\Delta_0 + \Delta_1 + \Delta_2 + 3W_{ave})},$$

where i=0, 1, and 2, and
where $\Delta_0$ is a local gradient determined by the value of the difference between a reconstructed side adjacent pixel and reconstructed preceding diagonal adjacent pixel, $\Delta_1$ is a local gradient determined by the value of the difference between a reconstructed diagonal adjacent pixel and a reconstructed preceding diagonal adjacent pixel, $\Delta_2$ is a local gradient determined by the value of the difference between a reconstructed top adjacent pixel and a reconstructed diagonal adjacent pixel, and $W_{ave}$ is a small constant term greater than or equal to 1.

9. The method claimed in claim 6, wherein said predicting step includes predicting the value of a pixel $p_{ij}$ by forming a linear combination of a reconstructed side adjacent pixel $[x_{i,j-1}]_q$, and a reconstructed following diagonal adjacent pixel $[x_{i-1,j+1}]_q$

$$p_{i,j} = \alpha_3 \left[ x_{i,j-1} \right]_q + \alpha_4 \left[ x_{i-1,j+1} \right]_q ,$$

where weighting coefficients $\alpha_i$ are determined as follows

$$\alpha_i = \frac{\Delta_i + W_{ave}}{(\Delta_3 + \Delta_4 + 2 W_{ave})}$$

for i=3, and 4, and
where $\Delta_3$ is a local gradient determined by the value of the difference between a reconstructed top adjacent pixel and reconstructed side adjacent pixel, and $\Delta_4$ is a local gradient determined by the value of the difference between a reconstructed following diagonal adjacent pixel and a reconstructed top adjacent pixel, and $W_{ave}$ is a small constant term greater than or equal to 1.

10. The method claimed in claim 6, wherein said digital image signal represents multiple related images, and wherein said predicting step includes predicting the value of a pixel $p_{ij}$ by forming a linear combination of a reconstructed side adjacent $[x_{i,j-1}]_q$, top adjacent $[x_{i-1,j}]_q$, previous side adjacent $[\pi_{i,j-1}]_q$, and previous top adjacent pixel $[\pi_{i-1,j}]_q$ values, as follows:

$$P_{ij} = \left[ \pi_{ij} \right]_q + \alpha \left( \left[ x_{i,j-1} \right]_q - \left[ \pi_{i,j-1} \right]_q \right) + (1 - \alpha) \left( \left[ x_{i-1,j} \right]_q - \left[ \pi_{i-1,j} \right]_q \right) ,$$

where a weighting coefficient $\alpha$ is determined as follows:

$$\alpha = \frac{\Delta_1 + W_{ave}}{\Delta_1 + \Delta_2 + 2 W_{ave}} ,$$

where $\Delta_1$ is a local gradient determined by the value of the difference between a reconstructed previous top adjacent pixel and a reconstructed previous adjacent pixel, and $\Delta_2$ is a local gradient determined by the value of the difference between a reconstructed previous side adjacent pixel and a reconstructed previous adjacent pixel, and $W_{ave}$ is a small constant term greater than or equal to 1.

11. An article of manufacture, comprising: a computer usable medium having computer readable program code means embodied therein for causing a computer to encode a digital image signal having pixels representing intensity, the computer readable code means comprising:

   a) means for predicting a pixel value from a local multidimensional region of the digital image signal using a weighted value of local pixels wherein said weighting is a continuous quantity determined as a ratio of a function of local gradients; b) means for subtracting the predicted pixel value from an original pixel value to form a residual pixel value; and c) means for encoding the residual pixel value.

12. Apparatus for decoding an image signal encoded by the apparatus of claim 1, comprising:

   a) means for decoding a residual pixel value;
   b) means for reconstructing an image pixel value by adding said residual pixel value to a corresponding predicted pixel value; and
   c) means for predicting a pixel value from a local multidimensional region of the digital image signal using a weighted value of local pixel values, said weighted value being a continuous quantity determined as a ratio of a function of local gradients.

13. A method for decoding an image signal encoded by the method of claim 6, comprising the steps of:

   a) decoding a residual pixel value;
   b) reconstructing an image pixel value by adding said residual pixel value to a corresponding predicted pixel value; and
   c) predicting a pixel value from a local multidimensional region of the digital image signal using a weighted value of local pixel values, said weighted value being a continuous quantity determined as a ratio of a function of local gradients.

**14.** A digital image processing system, comprising the encoding apparatus claimed in claim 1 and the decoding apparatus claimed in claim 12.

**15.** A digital image processing method, comprising the steps of: encoding a digital image according to the method of claim 6 and decoding the encoded digital image according to the steps of claim 13.

FIG. 1

FIG. 2

FIG. 3

22

DECODE $[\delta_{ij}]_q$ + $\Sigma$ $[x_{ij}]_q$

COMPRESSED
BIT STREAM

24

+ 26

$P_{ij}$

PREDICT

28

$[\pi_{ij}]_q$

FIG. 4

34 36

$[x_{i-1,j-1}]_q$ | $[x_{i-1,j}]_q$

$[x_{i,j-1}]_q$ | $x_{ij}$

32 30

FIG. 5

FIG. 6

FIG. 7

EP 0 710 928 A2

$[x_{i-1,j-2}]q$　$[x_{i-1,j-1}]q$　$[x_{i-1,j}]q$　$[x_{i-1,j+1}]q$

$\Delta_1$　$\Delta_2$　$\Delta_4$

$\Delta_0$

$[x_{i,j-1}]q$

$\Delta_3$

$x_{ij}$

FIG. 8

106 108

$[\pi_{i-1,j-1}]_q$ | $[\pi_{i-1,j}]_q$

$[\pi_{i,j-1}]_q$ | $[\pi_{ij}]_q$

104 102

98 100

$[x_{i-1,j-1}]_q$ | $[x_{i-1,j}]_q$

$[x_{i,j-1}]_q$ | $x_{ij}$

96 94

FIG. 9

FIG. 10